# EUROPEAN PATENT APPLICATION

(11) **EP 4 819 025 A1**
(43) Date of publication of application: **07.10.2026**
(21) Application number: 26169055.6
(22) Date of filing: 30.03.2026
(51) Int. Cl.: G06Q 50/12, H04L 51/02

(54) **CLOUD INTERFACE FOR RESTAURANT DRIVE THRU**

(30) Priority: 31.03.2025 US 202519096055
(71) Applicant: Digital Accoustics, LLC, Des Plaines, IL 60018 (US)
(72) Inventor: Lindsay, Daniel, Des Plaines, IL, 60018 (US); Stogel, Scott, Des Plaines, IL, 60018 (US)
(74) Representative: Kehl, Ascherl, Liebhoff & Ettmayr Patentanwälte Partnerschaft mbB

(57) **Abstract**

A method includes operating an apparatus in an active mode by: providing a first audio signal received at a crew microphone input to a server, providing a second audio signal received at a lane microphone input to the server and to a crew speaker output, and providing a third audio signal received from the server to the lane speaker output and to the crew speaker output. The method also includes, operating the apparatus in a training mode by: providing the first audio signal to the lane speaker output via the one or more processors, processing the second audio signal to remove an artifact of the first audio signal via the one or more processors; and providing, after the processing, the second audio signal to the server and to the crew speaker output via the one or more processors.

## Description

### BACKGROUND

Quick service restaurants often have a drive thru lane equipped with a loudspeaker and a microphone that facilitate communication between a customer in their vehicle and a crew member working inside the restaurant, for the purpose of intake and fulfillment of orders for food or beverages. During times of heavy demand, a bottleneck can form in the drive thru lane while many customers wait for a limited numbers of crew members to process several orders one by one.

### SUMMARY

A first example is an apparatus comprising: a lane microphone input; a lane speaker output; a crew microphone input; a crew speaker output; one or more processors; and a computer readable medium storing instructions that, when executed by the one or more processors, cause the apparatus to perform functions comprising: operating the apparatus in an active mode by: providing a first audio signal received at the crew microphone input to a server via the one or more processors; providing a second audio signal received at the lane microphone input to the server and to the crew speaker output via the one or more processors; and providing a third audio signal received from the server to the lane speaker output and to the crew speaker output via the one or more processors; and operating the apparatus in a training mode by: providing the first audio signal to the lane speaker output via the one or more processors; processing the second audio signal to remove an artifact of the first audio signal via the one or more processors; and providing, after the processing, the second audio signal to the server and to the crew speaker output via the one or more processors.

A second example is a method of operating the apparatus of the first example, the method comprising: operating the apparatus in the active mode by: providing the first audio signal received at the crew microphone input to the server via the one or more processors; providing the second audio signal received at the lane microphone input to the server and to the crew speaker output via the one or more processors; and providing the third audio signal received from the server to the lane speaker output and to the crew speaker output via the one or more processors; and operating the apparatus in the training mode by: providing the first audio signal to the lane speaker output via the one or more processors; processing the second audio signal to remove the artifact of the first audio signal via the one or more processors; and providing, after the processing, the second audio signal to the server and to the crew speaker output via the one or more processors.

A third example is a non-transitory computer readable medium storing instructions that, when executed by the apparatus of the first example, cause the apparatus to perform the method of the second example.

When the term "substantially" or "about" is used herein, it is meant that the recited characteristic, parameter, or value need not be achieved exactly, but that deviations or variations, including, for example, tolerances, measurement error, measurement accuracy limitations, and other factors known to those of skill in the art may occur in amounts that do not preclude the effect the characteristic was intended to provide. In some examples disclosed herein, "substantially" or "about" means within +/- 0-5% of the recited value.

These, as well as other aspects, advantages, and alternatives will become apparent to those of ordinary skill in the art by reading the following detailed description, with reference where appropriate to the accompanying drawings. Further, it should be understood that this summary and other descriptions and figures provided herein are intended to illustrate by way of example only and, as such, that numerous variations are possible.

### BRIEF DESCRIPTION OF THE DRAWINGS

Figure 1 is a block diagram of an apparatus, according to an example.
Figure 2 is a block diagram of a server, according to an example.
Figure 3 is a schematic diagram of a system, according to an example.
Figure 4 is a block diagram of a method, according to an example.

### DETAILED DESCRIPTION

This disclosure includes improved methods and apparatus for fulfilling customer orders at quick service restaurants. Automated cloud-based machine learning systems can facilitate faster fulfillment of customer orders and lessen the need for expanded crews during peak demand times, which can save the restaurant money. These systems can be used to simultaneously operate multiple drive thru lanes (*i.e.,* multiple drive thru communication interfaces) so that more orders can be received and fulfilled at a time. However, installation of such systems at a restaurant can be costly and burdensome. The methods and apparatus of this disclosure can be integrated with existing drive thru communication systems, which reduces installation costs and costs for training crew on new procedures.

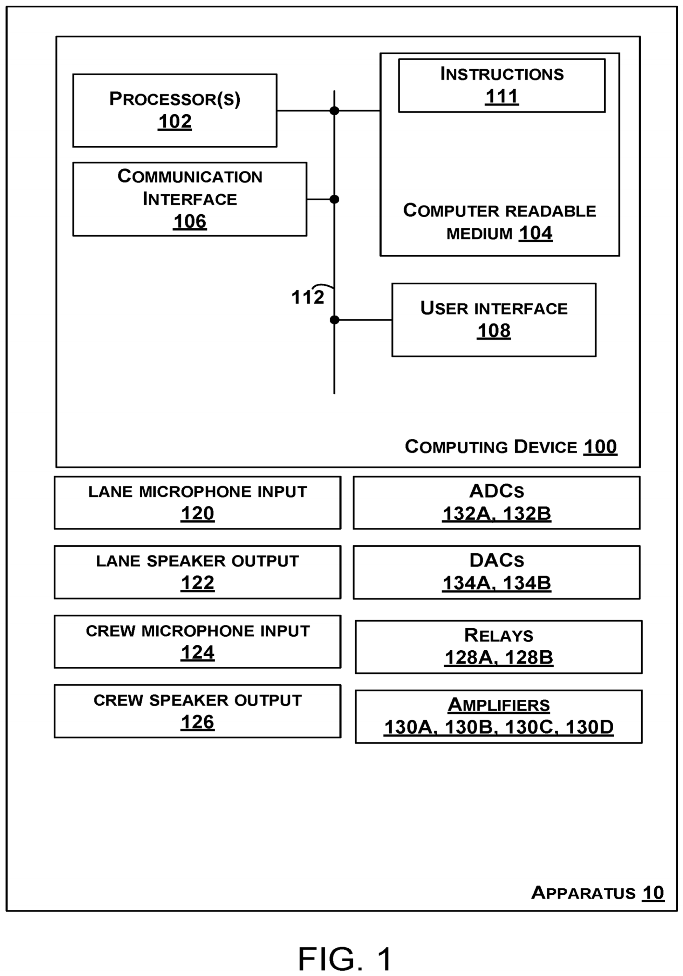

Figure 1 is a block diagram of an apparatus 10. The apparatus 10 includes a computing device 100, a lane microphone input 120, a lane speaker output 122, a crew microphone input 124, a crew speaker output 126, a relay 128A, a relay 128B, an amplifier 130A, an amplifier 130B, an amplifier 130C, an amplifier 130D, an analog-to-digital converter (ADC) 132A, an ADC 132B, a digital-to-analog (DAC) converter 134A, and a DAC 134B.

The computing device 100 includes one or more processors 102, a non-transitory computer readable medium 104, a communication interface 106, and a user interface 108. Components of the computing device 100 are linked together by a system bus, network, or other connection mechanism 112.

The one or more processors 102 may be any type of processor(s), such as a microprocessor, a field programmable gate array, a digital signal processor, a multicore processor, etc., coupled to the non-transitory computer readable medium 104.

The non-transitory computer readable medium 104 may be any type of memory, such as volatile memory like random access memory (RAM), dynamic random access memory (DRAM), static random access memory (SRAM), or non-volatile memory like read-only memory (ROM), flash memory, magnetic or optical disks, or compact-disc read-only memory (CD-ROM), among other devices used to store data or programs on a temporary or permanent basis.

Additionally, the non-transitory computer readable medium 104 may store instructions 111. The instructions 111 are executable by the one or more processors 102 to cause the computing device 100 to perform any of the functions or methods described herein.

The communication interface 106 may include hardware to enable communication within the computing device 100 and/or between the computing device 100 and one or more other devices. The hardware can include any type of input and/or output interfaces, a universal serial bus (USB), PCI Express, transmitters, receivers, and antennas, for example. The communication interface 106 may be configured to facilitate communication with one or more other devices, in accordance with one or more wired or wireless communication protocols. For example, the communication interface 106 may be configured to facilitate wireless data communication for the computing device 100 according to one or more wireless communication standards, such as one or more Institute of Electrical and Electronics Engineers (IEEE) 801.11 standards, ZigBee standards, Bluetooth standards, etc. As another example, the communication interface 106 can be configured to facilitate wired data communication with one or more other devices. The communication interface 106 may also include analog-to-digital converters (ADCs) or digital-to-analog converters (DACs) that the computing device 100 can use to control various components of the computing device 100 or external devices.

The user interface 108 may include any type of display component configured to display data. As one example, the user interface 108 can include a touchscreen display. As another example, the user interface 108 can include a flat-panel display, such as a liquid-crystal display (LCD) or a light-emitting diode (LED) display. The user interface 108 can include one or more pieces of hardware used to provide data and control signals to the computing device 100. For instance, the user interface 108 can include a mouse or a pointing device, a keyboard or a keypad, a microphone, a touchpad, or a touchscreen, among other possible types of user input devices. Generally, the user interface 108 can enable an operator to interact with a graphical user interface (GUI) provided by the computing device 100 (e.g., displayed by the user interface 108).

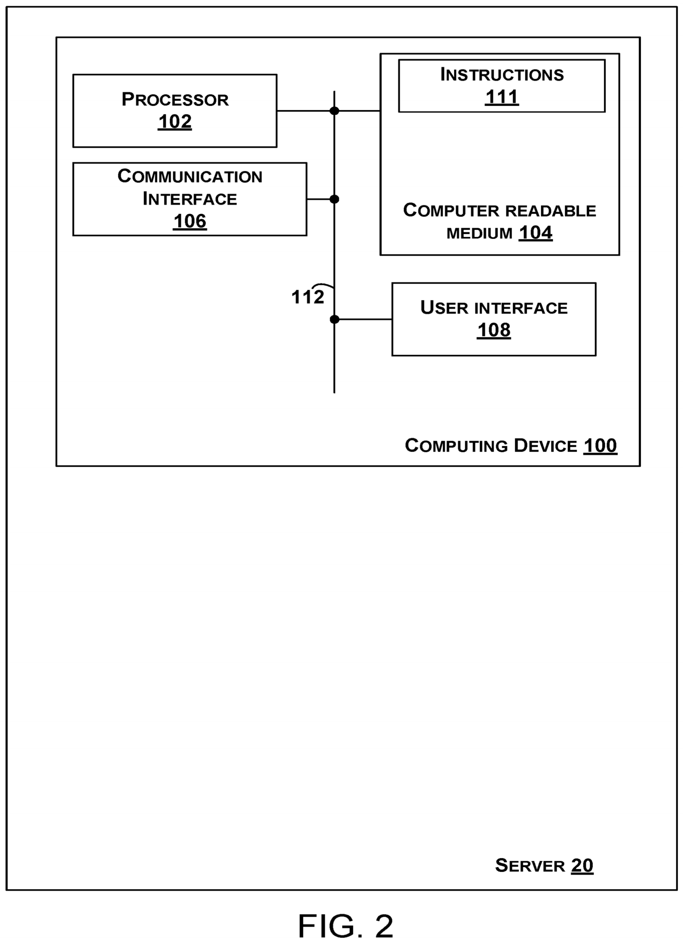

Figure 2 is a block diagram of a server 20. The server 20 includes a computing device 100.

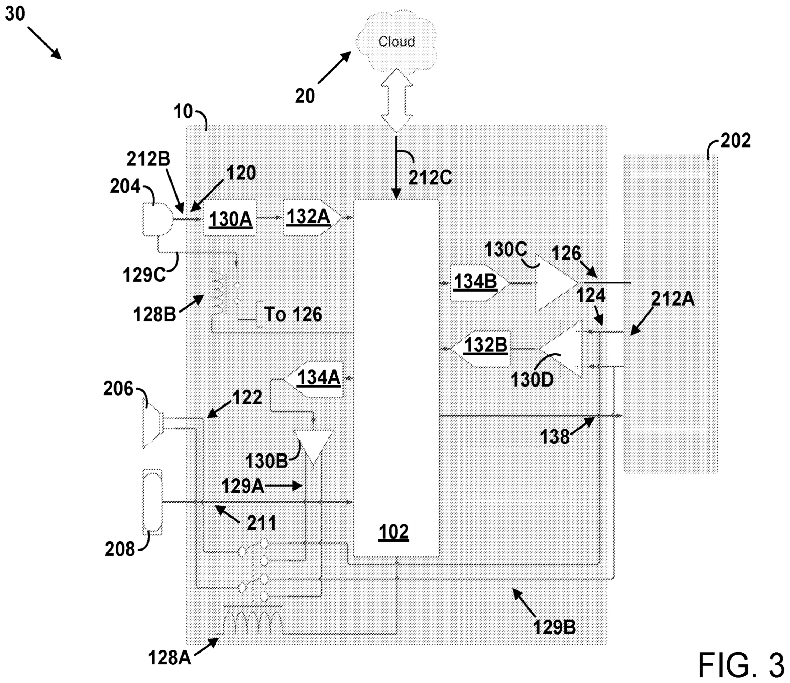

Figure 3 is a schematic diagram of a system 30. The system 30 includes the apparatus 10, the server 20, a crew communication device 202, a lane microphone 204, a lane speaker 206, and a vehicle sensor 208.

The crew communication device 202 can take the form of a headset equipped with a speaker that converts incoming audio signals (*e.g.*, a voice of a customer) into sound and a microphone that converts sound (*e.g.*, a voice of a crew member) into an audio signal 212A (*e.g.,* a double ended analog audio signal).

The lane microphone 204 converts nearby sound (*e.g*., at a drive thru lane) into an audio signal 212B.

The lane speaker 206 converts an audio signal into sound (*e.g.,* at a drive thru lane).

The vehicle sensor 208 is configured to generate a signal 211 that indicates whether a vehicle is present at the location of the lane microphone 204 and the lane speaker 206.

The lane microphone input 120 takes the form of an electrical connection and is configured to receive the audio signal 212B and provide the audio signal 212B to an amplifier 130A. The amplifier 130A amplifies or attenuates the audio signal 212B and provides the audio signal 212B to the ADC 132A. The ADC 132A converts the audio signal 212B from an analog format to a digital format for processing by the processor 102. In other examples, the lane microphone input 120 provides the audio signal 212B directly to the ADC 132A.

The lane speaker output 122 takes the form of an electrical connection and is configured to receive an audio signal from an amplifier 130B and provide the audio signal to the lane speaker 206. That is, the DAC 134A converts an audio signal received from the processor 102 from a digital format to an analog format to be provided to the amplifier 130B. The amplifier 130B amplifies or attenuates the audio signal before providing the audio signal to the lane speaker output 122. In other examples, the lane speaker output 122 is connected directly to the DAC 134A.

The crew microphone input 124 takes the form of an electrical connection and is configured to receive the audio signal 212A from a microphone of the crew communication device 202. The crew microphone input 124 provides the audio signal 212A to the amplifier 130D. The amplifier 130D amplifies or attenuates the audio signal 212A and provides the audio signal 212A to the ADC 132B. The ADC 132B converts the audio signal 212A from an analog format to a digital format for processing by the processor 102. In other examples, the audio signal 212A is received directly by the ADC 132B.

The crew speaker output 126 takes the form of an electrical connection and is configured to provide an audio signal from the amplifier 130C to a speaker of the crew communication device 202. That is, the DAC 134B converts the audio signal received from the processor 102 from a digital format to an analog format to be provided to the amplifier 130C. The amplifier 130C amplifies or attenuates the audio signal before providing the audio signal to the speaker of the crew communication device 202. In other examples, the crew speaker output 126 is connected directly to the DAC 134B.

When energized, the relay 128A is configured to provide a conductive path 129A between the amplifier 130B (or the DAC 134A) and the lane speaker output 122 and break the conductive path 129B between the lane speaker output 122 and the crew microphone input 124 that bypasses the processor(s) 102. When deactivated, the relay 128A is configured to establish the conductive path 129B between the lane speaker output 122 and the crew microphone input 124 and break the conductive path 129A.

When deactivated, the relay 128B is configured to provide a conductive path 129C between the lane microphone 204 and the crew speaker output 126 that bypasses the processor(s) 102.

In some examples, the apparatus 10 operates in an active mode during which the server 20 uses a cloud-based machine learning system and the audio signal 212B to receive and fulfill orders for food or beverages from a customer present at the lane microphone 204 and the lane speaker 206. At the same time, a crew member uses the crew communication device 202 to monitor the customer's voice encoded by the audio signal 212B and to monitor the artificial voice generated by the server 20. In other examples, the server 20 provides a connection to a call center with a human operator. Thus, instead of the artificial voice, the customer and the crew member could hear a human operator that receives and fulfills orders.

In the active mode, the apparatus 10 provides the audio signal 212A received at the crew microphone input 124 to the server 20 via the processor(s) 102. More specifically, the amplifier 130D receives the audio signal 212A from the microphone of the crew communication device 202 and amplifies or attenuates the audio signal 212A before providing the audio signal 212A to the ADC 132B. The ADC 132B converts the audio signal 212A from an analog to a digital format and provides the audio signal 212A to the processor 102. The processor 102 then sends the audio signal 212A to the server 20 via the communication interface 106. In the active mode, the server 20 generally only uses the audio signal 212A to detect a crew member's voice which is interpreted as a command to interrupt the active mode and operate the apparatus 10 in a crew takeover mode that is described in more detail further below.

In the active mode, the apparatus 10 also provides the audio signal 212B received at the lane microphone input 120 to the server 20 and to the crew speaker output 126 via the processor(s) 102. More specifically, the amplifier 130A receives the audio signal 212B from the lane microphone input 120 and amplifies or attenuates the audio signal 212B before providing the audio signal 212B to the ADC 132A. The ADC 132A converts the audio signal 212B from an analog to a digital format and provides the audio signal 212B to the processor(s) 102. The processor(s) 102 then sends the audio signal 212B to the server 20 via the communication interface 106 and to the crew speaker output 126 via the DAC 134B and/or the amplifier 130C. Thus, in the active mode, the customer's voice is analyzed by the server 20 (or provided to a human operator) and heard by a crew member using the crew communication device 202.

In the active mode, the apparatus 10 also provides an audio signal 212C received from the server 20 to the lane speaker output 122 and to the crew speaker output 126 via the processor(s) 102. Thus, in the active mode, the artificial voice generated by the machine learning system of the server 20 or the human operator's voice is provided at the lane speaker 206 and at the speaker of the crew communication device 202 so that both the customer and the crew member hears the artificial voice or the human operator's voice.

Accordingly, in the active mode of operating the apparatus 10, the customer at the lane microphone 204 and the lane speaker 206 can speak to the server 20 and can hear the artificial voice or human operator's voice provided by the server 20. In the active mode, the server 20 captures and analyzes the speech of the customer and listens for a potential command from the crew member to discontinue the active mode of operation. By analyzing the audio signal 212B, the server 20 can make a record of the customer's order and provide the record to crew members working in the restaurant's kitchen, for example via an internet connection to a computing device accessible to the kitchen crew members.

Operation in the active mode can also include the processor(s) 102 processing the audio signal 212B to remove an artifact of the audio signal 212C from the audio signal 212B. In this context, the processor(s) 102 providing the audio signal 212B to the server and to the crew speaker output 126 is performed after the processor(s) 102 removes the artifact of the audio signal 212C from the audio signal 212B. The lane microphone 204 typically detects the artificial voice or the human operator's voice from the lane speaker 206, in addition to the customer's voice. The above echo cancellation process enables the server 20 and the crew member to more clearly analyze the customer's voice. The timing of providing the audio signal 212C to the processor(s) 102 before providing the audio signal 212C to the lane speaker output 122 allows the processor(s) 102 to use the audio signal 212C as a reference signal for removing the artifact of the audio signal 212C from the audio signal 212B, because the processor(s) 102 has time to process the audio signal 212C before the voice encoded by the audio signal 212C is detected by the lane microphone 204. Thus, the processor(s) 102 identifies, within the audio signal 212B, the artifact that resembles the audio signal 212C and filters or removes the artifact from the audio signal 212B.

During the active mode, the processor(s) 102 energizes the relay 128A, thereby establishing the conductive path 129A and breaking the conductive path 129B. A power failure for the processor(s) 102 and resultant deactivation of the relay 128A causes the conductive path 129A to be broken and the conductive path 129B to be established. Thus, the lane speaker output 122 can be directly connected to the crew microphone input 124 when the apparatus 10 or the server 20 is malfunctioning.

During the active mode, the processor(s) 102 energizes the relay 128B, thereby breaking the conductive path 129C. A power failure for the processor(s) 102 and resultant deactivation of the relay 128B causes the conductive path 129C to be established. Thus, the lane microphone input 120 can be directly connected to the crew speaker output 126 when the apparatus 10 or the server 20 is malfunctioning.

During operation in the active mode, the crew member may speak into the crew communication device 202, thereby causing the audio signal 212A to include the crew member's audible voice, which can be considered a trigger event. Thus, in response to the apparatus 10 and/or the server 20 detecting a trigger event, the apparatus operates in the crew takeover mode. The crew takeover mode is typically invoked when the crew member determines that the machine learning system or the human operator is struggling to efficiently receive and fulfill an order from the customer. Because the apparatus 10 is generally integrated into existing drive thru communication systems, the crew takeover mode being triggered by the crew member's voice can be beneficial because the apparatus 10 might not have the capability to receive or interpret a command entered via a push button on the crew member's headset, as may be the case with existing drive thru communication systems.

In the crew takeover mode, the apparatus 10 provides the audio signal 212A to the lane speaker output 122 via the processor(s) 102. Thus, the crew member's voice but generally not the artificial voice or the human operator's voice is reproduced by the lane speaker 206 in the crew takeover mode. Next, the processor(s) 102 processes the audio signal 212B to remove an artifact of the audio signal 212A. The timing of providing the audio signal 212A to the processor(s) 102 before providing the audio signal 212A to the lane speaker output 122 allows the processor(s) 102 to use the audio signal 212A as a reference signal for removing the artifact of the audio signal 212A from the audio signal 212B, because the processor(s) 102 has time to process the audio signal 212A before the voice encoded by the audio signal 212A is detected by the lane microphone 204. After removal of the artifact of the audio signal 212A from the audio signal 212B, the processor(s) 102 provides the audio signal 212B to the crew speaker output 126. Thus, the processor(s) 102 identifies, within the audio signal 212B, the artifact that resembles the audio signal 212A and filters or removes the artifact from the audio signal 212B.

At the outset of operating in crew takeover mode, the apparatus 10 can send, via the communication interface 106, a notification to the server 20 indicating that the apparatus 10 is operating in the crew takeover mode. The server 20 can responsively pause or cancel operations of the call center or the machine learning model with respect to the current customer.

At the outset of operating in crew takeover mode, the apparatus 10 can stop providing the audio signal 212C to the lane speaker output 122 and to the crew speaker output 126 as well.

During the crew takeover mode, the processor(s) 102 energizes the relay 128A, thereby establishing the conductive path 129A and breaking the conductive path 129B. A power failure for the processor(s) 102 and resultant deactivation of the relay 128A causes the conductive path 129A to be broken and the conductive path 129B to be established. Thus, the lane speaker output 122 can be directly connected to the crew microphone input 124 when the apparatus 10 or the server 20 is malfunctioning.

During the crew takeover mode, the processor(s) 102 energizes the relay 128B, thereby breaking the conductive path 129C. A power failure for the processor(s) 102 and resultant deactivation of the relay 128B causes the conductive path 129C to be established. Thus, the lane microphone input 120 can be directly connected to the crew speaker output 126 when the apparatus 10 or the server 20 is malfunctioning.

In some examples, the apparatus 10 and the server 20 operate in a training mode. The training mode includes the processor(s) 102 providing the audio signal 212A to the lane speaker output 122, the processor(s) 102 processing the audio signal 212B to remove the artifact of the audio signal 212A and, after removing the artifact of the audio signal 212A, the processor(s) 102 providing the audio signal 212B to the server 20 and to the crew speaker output 126. Thus, in the training mode, the server 20 uses the customer's voice to train the machine learning model to better receive and fulfill customer orders during future operation in the active mode. Meanwhile, the crew member hears the customer's voice and actually receives and fulfills the order.

The above training mode echo cancellation process enables the server 20 and the crew member to more clearly analyze the customer's voice. The timing of providing the audio signal 212A to the processor(s) 102 before providing the audio signal 212A to the lane speaker output 122 allows the processor(s) 102 to use the audio signal 212A as a reference signal for removing the artifact of the audio signal 212A from the audio signal 212B, because the processor(s) 102 has time to process the audio signal 212A before the voice encoded by the audio signal 212A is detected by the lane microphone 204. Thus, the processor(s) 102 identifies, within the audio signal 212B, the artifact that resembles the audio signal 212A and filters or removes the artifact from the audio signal 212B.

During the training mode, the processor(s) 102 energizes the relay 128A, thereby establishing the conductive path 129A and breaking the conductive path 129B. A power failure for the processor(s) 102 and resultant deactivation of the relay 128A causes the conductive path 129A to be broken and the conductive path 129B to be established. Thus, the lane speaker output 122 can be directly connected to the crew microphone input 124 when the apparatus 10 or the server 20 is malfunctioning.

During the training mode, the processor(s) 102 energizes the relay 128B, thereby breaking the conductive path 129C. A power failure for the processor(s) 102 and resultant deactivation of the relay 128B causes the conductive path 129C to be established. Thus, the lane microphone input 120 can be directly connected to the crew speaker output 126 when the apparatus 10 or the server 20 is malfunctioning.

The apparatus 10 can also operate in a bypass mode in response to the processor(s) 102 determining that a watchdog timer provided by the processor(s) 102 has been interrupted. The bypass mode includes the relay 128B deactivating and establishing the conductive path 129C from the lane microphone input 120 to the crew speaker output 126 that bypasses the processor(s). The bypass mode also includes the relay 128A establishing the conductive path 129B from the lane speaker output 122 to the crew microphone input 124 that bypasses the processor(s) 102.

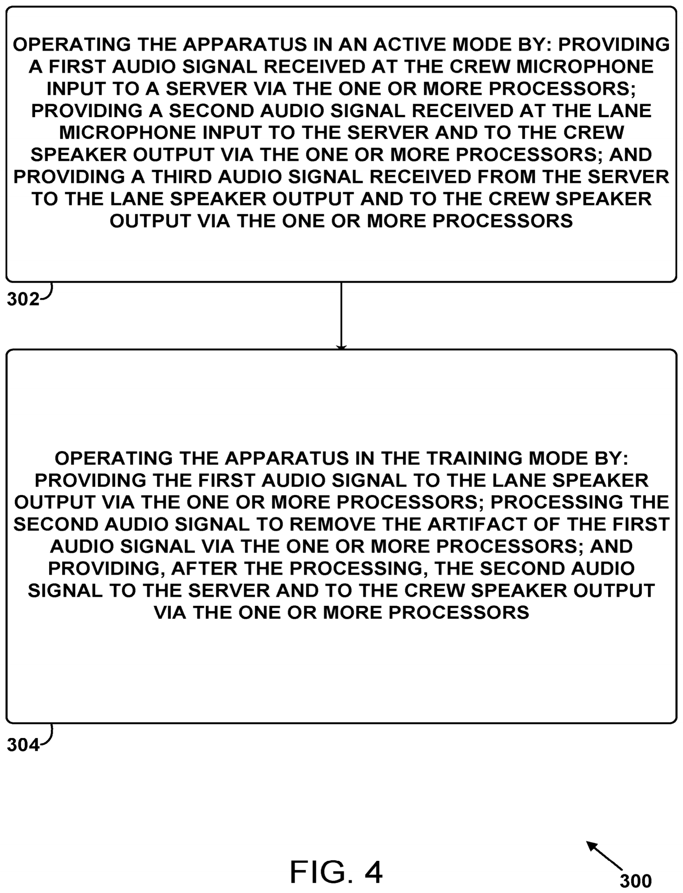

Figure 4 is a block diagram of a method 300. As shown in Figure 4, the method 300 includes one or more operations, functions, or actions as illustrated by blocks 302 and 304. Although the blocks are illustrated in a sequential order, these blocks may also be performed in parallel, and/or in a different order than those described herein. Also, the various blocks may be combined into fewer blocks, divided into additional blocks, and/or removed based upon the desired implementation.

At block 302, the method 300 includes operating the apparatus 10 in an active mode by: providing the audio signal 212A received at the crew microphone input 124 to the server 20 via the one or more processors 102; providing the audio signal 212B received at the lane microphone input 120 to the server 20 and to the crew speaker output 126 via the one or more processors 102; and providing the audio signal 212C received from the server 20 to the lane speaker output 122 and to the crew speaker output 126 via the one or more processors 102. Functionality related to block 302 is described above with reference to Figure 3.

At block 304, the method 300 includes, operating the apparatus 10 in a training mode by: providing the audio signal 212A to the lane speaker output 122 via the processor(s); processing the audio signal 212B to remove the artifact of the audio signal 212A via the processor(s) 102; and providing, after the processing, the audio signal 212B to the server 20 and to the crew speaker output 126 via the processor(s).. Functionality related to block 304 is described above with reference to Figure 3.

While various example aspects and example embodiments have been disclosed herein, other aspects and embodiments will be apparent to those skilled in the art. The various example aspects and example embodiments disclosed herein are for purposes of illustration and are not intended to be limiting, with the true scope and spirit being indicated by the following claims.

## Claims

1. An apparatus comprising:
a lane microphone input;
a lane speaker output;
a crew microphone input;
a crew speaker output;
one or more processors; and
a computer readable medium storing instructions that, when executed by the one or more processors, cause the apparatus to perform functions comprising:
operating the apparatus in an active mode by:
providing a first audio signal received at the crew microphone input to a server via the one or more processors;
providing a second audio signal received at the lane microphone input to the server and to the crew speaker output via the one or more processors; and
providing a third audio signal received from the server to the lane speaker output and to the crew speaker output via the one or more processors; and
operating the apparatus in a training mode by:
providing the first audio signal to the lane speaker output via the one or more processors;
processing the second audio signal to remove an artifact of the first audio signal via the one or more processors; and
providing, after the processing, the second audio signal to the server and to the crew speaker output via the one or more processors.

2. The apparatus of claim 1, the functions further comprising: in response to detecting a trigger event during operation in the active mode, operating the apparatus in a crew takeover mode by:
providing the first audio signal to the lane speaker output via the one or more processors;
processing the second audio signal to remove the artifact of the first audio signal via the one or more processors; and
providing, after the processing, the second audio signal to the crew speaker output via the one or more processors.

3. The apparatus of claim 2, wherein detecting the trigger event comprises detecting a voice of a crew member in the first audio signal.

4. The apparatus of claim 2, wherein operating the apparatus in the crew takeover mode further comprises halting provision of the third audio signal to the lane speaker output and to the crew speaker output.

5. The apparatus of claim 2, further comprising a relay, wherein operating the apparatus in the crew takeover mode comprises energizing the relay, thereby breaking a conductive path from the lane microphone input to the crew speaker output that bypasses the one or more processors.

6. The apparatus of claim 5, wherein deactivation of the relay causes the conductive path to be established.

7. The apparatus of claim 2, further comprising a relay, wherein operating the apparatus in the crew takeover mode comprises energizing the relay, thereby breaking a conductive path from the lane speaker output to the crew microphone input that bypasses the one or more processors.

8. The apparatus of claim 7, wherein deactivation of the relay causes the conductive path to be established.

9. The apparatus of claim 1, wherein operating the apparatus in the active mode further comprises:
processing the second audio signal to remove a second artifact of the third audio signal via the one or more processors, wherein
providing the second audio signal to the server and to the crew speaker output comprises providing the second audio signal after processing the second audio signal to remove the second artifact of the third audio signal.

10. The apparatus of claim 1, further comprising a relay, wherein operating the apparatus in the training mode comprises energizing the relay, thereby breaking a conductive path from the lane microphone input to the crew speaker output that bypasses the one or more processors, and
wherein deactivation of the relay causes the conductive path to be established.

11. The apparatus of claim 1, further comprising a relay, wherein operating the apparatus in the training mode comprises energizing the relay, thereby breaking a conductive path from the lane speaker output to the crew microphone input that bypasses the one or more processors, and
wherein deactivation of the relay causes the conductive path to be established.

12. The apparatus of claim 1, further comprising a relay, wherein operating the apparatus in the active mode comprises energizing the relay, thereby breaking a conductive path from the lane microphone input to the crew speaker output that bypasses the one or more processors, and
wherein deactivation of the relay causes the conductive path to be established.

13. The apparatus of claim 1, further comprising a relay, wherein operating the apparatus in the active mode comprises energizing the relay, thereby breaking a conductive path from the lane speaker output to the crew microphone input that bypasses the one or more processors, and
wherein deactivation of the relay causes the conductive path to be established.

14. The apparatus of claim 1, the functions further comprising operating the apparatus in a bypass mode in response to determining that a watchdog timer provided by the one or more processors has been interrupted, wherein operating the apparatus in the bypass mode comprises:
establishing a first conductive path from the lane microphone input to the crew speaker output that bypasses the one or more processors; and
establishing a second conductive path from the lane speaker output to the crew microphone input that bypasses the one or more processors.

15. A method of operating the apparatus of claim 1, the method comprising:
operating the apparatus in the active mode by:
providing the first audio signal received at the crew microphone input to the server via the one or more processors;
providing the second audio signal received at the lane microphone input to the server and to the crew speaker output via the one or more processors; and
providing the third audio signal received from the server to the lane speaker output and to the crew speaker output via the one or more processors; and
operating the apparatus in the training mode by:
providing the first audio signal to the lane speaker output via the one or more processors;
processing the second audio signal to remove the artifact of the first audio signal via the one or more processors; and
providing, after the processing, the second audio signal to the server and to the crew speaker output via the one or more processors.

16. A non-transitory computer readable medium storing instructions that, when executed by the apparatus of any one of claims 1-14, cause the apparatus to perform the method of claim 15.
